# EUROPEAN PATENT SPECIFICATION

(11) **EP 3 790 786 B1**
(45) Date of publication and mention of the grant of the patent: **23.02.2022**
(21) Application number: 19723506.2
(22) Date of filing: 07.05.2019
(51) Int. Cl.: B62K 5/08, B62K 13/04, B62K 5/10

(54) **TILTING MOTOR VEHICLE WITH THREE OR FOUR-WHEELS, AND KIT FOR CONVERTING A TWO-WHEELED MOTOR VEHICLE INTO A THREE -WHEELED MOTOR VEHICLE**
KIPPMOTORFAHRZEUG MIT DREI ODER VIER RÄDERN UND KIT ZUR UMWANDLUNG EINES ZWEIRÄDRIGEN KRAFTFAHRZEUGS IN EIN DREIRÄDRIGES KRAFTFAHRZEUG
VÉHICULE AUTOMOBILE BASCULANT À TROIS OU QUATRE ROUES, ET KIT DE CONVERSION D'UN VÉHICULE AUTOMOBILE À DEUX ROUES EN UN VÉHICULE AUTOMOBILE À TROIS ROUES

(30) Priority: 09.05.2018 IT 201800005199
(43) Date of publication of application: 17.03.2021
(73) Proprietor: Piaggio & C. S.P.A., 56025 Pontedera Pisa (IT)
(72) Inventor: RAFFAELLI, Andrea, 56025 Pontedera, Pisa (IT); MARIOTTI, Valentino, 56025 Pontedera, Pisa (IT)
(74) Representative: Zanettin, Gianluigi
(86) International application number: PCT/IB2019/053718
(87) International publication number: WO 2019/215599

(56) References cited:
- CN-U- 202 320 641
- US-A1- 2015 197 304

## Description

### FIELD OF APPLICATION

The present invention relates to a three-or four-wheeled tilting motor vehicle and a kit for converting a two-wheeled motor vehicle into a three-wheeled motor vehicle.

In particular, the motor vehicle according to the invention may be a motor vehicle equipped with two steering and tilting wheels at the front and a fixed axle drive wheel at the back.

### STATE OF THE ART

Generally, the frame of a motor vehicle is made in one piece as it must comply with specific dimensional tolerances.

From a production point of view, this significantly limits the possibilities of creating a modular frame that can be used regardless in different models of motor vehicles by varying some specific, removable structural components.

A modular frame could be adopted as a common base in the construction of a two-wheeled motor vehicle and a tilting three-wheeled motor vehicle (with two front wheels), by providing it with a removable forecarriage component, variable depending on the type of forecarriage. This would simplify the production process, opening up the possibility of retrofitting a two-wheeled motor vehicle to make it into a three-wheeled motor vehicle and vice versa.

In particular, it would be productively meaningful to construct a three- or four-wheeled tilting motor vehicle, with two front wheels, using a base frame of a two-wheeled motor vehicle and varying only one forecarriage component.

From a production point of view, making a modular frame by using a removable structural element is complex since it requires:
- comparable construction accuracy to a one-piece frame in terms of tolerance; and
- ease of assembly, given that the additional (removable) structural part must be able to be mounted and fastened to the base frame quickly, respecting the times of a production line and without unduly complicating any retrofitting.

In the specific case of the construction of a three- or four-wheeled tilting motor vehicle from a base frame of a two-wheeled motor vehicle, the removable forecarriage component must also meet the following specifications:
- increase the rigidity of the base frame, to enable it to withstand the stresses of a tilting motor vehicle; and
- not require tolerances stricter than the general tolerances of the base frame design.

To date, a tilting three-wheeled motor vehicle (with two front wheels) made from a modular frame shared with a two-wheeled motor vehicle is not known of in the art. Document US2015/197304A1 shows the preamble of claims 1 and 10.

### PRESENTATION OF THE INVENTION

In the light of the above, there is therefore a need in the motor vehicle manufacturing sector to construct a tilting three-wheeled motor vehicle (with two front wheels) with a modular frame shared with a two-wheeled motor vehicle, which meets entirely or at least in part the above requirements.

Such need is satisfied by a three- or four-wheeled tilting motor vehicle according to claim 1 and by a kit for converting a two-wheeled motor vehicle into a three-wheeled motor vehicle according to claim 10.

### DESCRIPTION OF THE DRAWINGS

Further characteristics and advantages of the present invention will be more clearly comprehensible from the description given below of its preferred and non-limiting embodiments, wherein:
- figure 1 shows a schematic, lateral,perspective view of a frame of a three- or four-wheeled tilting motor vehicle according to one embodiment of the present invention, equipped with a forecarriage support frame complete with two tilting front wheels;
- figure 2 shows a schematic, front perspective view of the frame in figure 1;
- figures 3 and 4 respectively show a schematic, lateral, perspective view and a schematic, front perspective view of the frame in figure 1, illustrated without the two front wheels;
- figure 5 shows a schematic, lateral orthogonal view, partially in cross-section, of the frame in figure 3;
- figure 6 shows a partially exploded view of the frame in figure 3;
- figure 7 shows a schematic, orthogonal, lateral view, partially in cross-section, of the frame of a three- or four-wheeled tilting motor vehicle according to an alternative embodiment of the present invention, the frame being provided with a forecarriage support frame, illustrated without the two tilting front wheels; and
- figure 8 shows a partially exploded view of the frame in figure 7.

The elements or parts of elements common to the embodiments described below will be indicated using the same reference numerals.

### DETAILED DESCRIPTION

With reference to the aforementioned figures, reference numeral 1 globally denotes a three- or four-wheeled tilting motor vehicle according to the present invention.

For the purposes of the present invention, it should be pointed out that the term motor vehicle should be considered in a broad sense, encompassing any motorcycle having at least three wheels, i.e. two front wheels, as described better below, and at least one rear wheel. Such definition therefore also comprises so-called quad bikes having two wheels on the forecarriage and two wheels on the rear.

According to a general embodiment, the three or four wheeled tilting motor vehicle 1 has at least two front wheels 10', 10".

The tilting motor vehicle 1 comprises a frame 6 extending from a forecarriage 8 supporting the pair of front wheels 10, 10", to a rear 12 which supports one or more rear wheels (not shown).

As illustrated in the accompanying figures, the aforementioned frame 6 defines a steering sleeve 7 i.e. the portion of the frame intended to support a steering column 9 along the steering axle S-S of the vehicle. Generally, the steering sleeve 7 is diametrically crossed by a centreline plane M-M of the motor vehicle 1.

The motor vehicle 1 further comprises a steering column 9 coaxially supported by the aforesaid steering sleeve 7 along a steering axle S-S.

It is possible to distinguish a left front wheel 10' and a right front wheel 10" in which the definition of left and right wheels 10', 10" is purely formal and means in relation to a driver of the vehicle. Said wheels are arranged to the left and right of the centreline plane M-M of the motor vehicle, compared to a point of observation of a driver driving it.

For the purposes of the present invention, the frame 6 of the motor vehicle may be any shape, size and may for example be of the lattice type, box type, cradle, single or double, and so forth. The frame 6 of the motor vehicle can be in one piece or in multiple parts; for example the frame 6 of the motor vehicle interconnects with a rear frame 13 which may comprise an oscillating rear fork (not shown) which supports one or more rear drive wheels (not shown). The aforesaid rear oscillating fork may be connected to the frame 6 by direct hinging or by the interposition of a lever mechanism and/or intermediate frames.

Preferably, the aforementioned frame 6 is a frame also utilisable for making a two-wheeled motor vehicle.

The forecarriage 8 of the motor vehicle 1 comprises a forecarriage frame 20 to which the two front wheels 10' and 10" are connected.

Advantageously, the two front wheels 10', 10" are kinematically connected to each other and to the forecarriage support frame 20 by means of a tilting kinematic mechanism 40 which enables the same to tilt and/or steer, in particular in a synchronous manner. The aforementioned tilting kinematic mechanism 40 can have any configuration as long as it is preferably functional to enable the front wheels to tilt and/or steer, in particular in a synchronous manner.

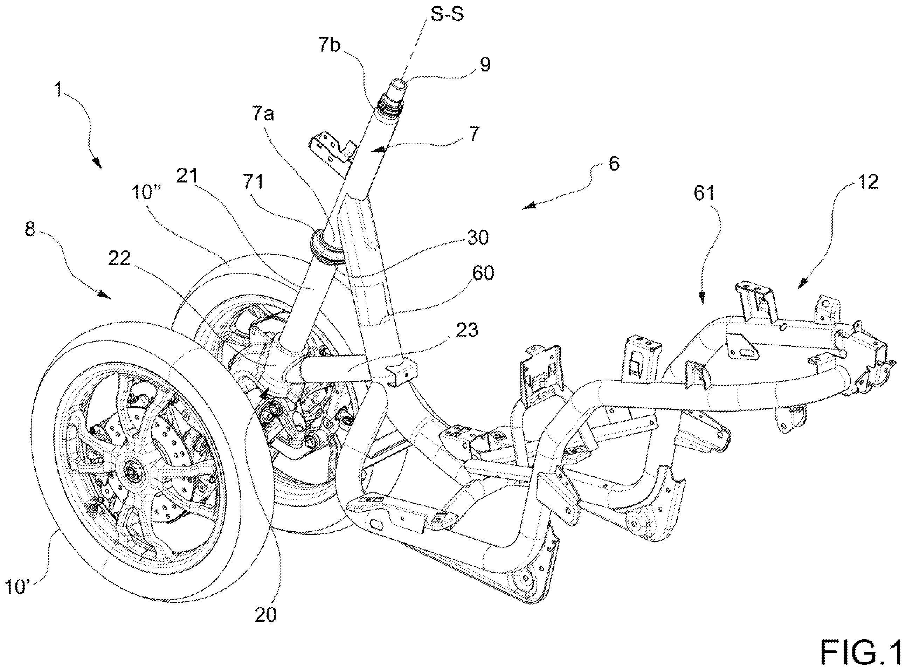

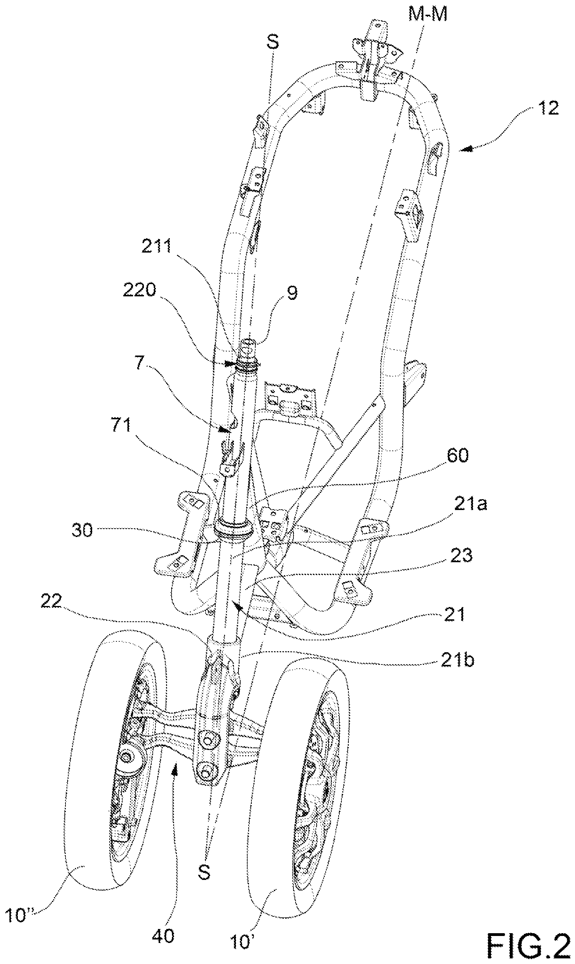

Preferably, as illustrated in particular in figures 1 and 2, the tilting kinematic mechanism 40 is an articulated quadrilateral system. In particular, the tilting kinematic mechanism 40 is configured to be enclosed in height in the volume of the wheels.

Said forecarriage support frame 20 comprises a tubular body 21 that is rigidly connected to the steering sleeve 7 at an upper end 21a of said tubular body 21.

The aforementioned tubular body 21 is intended to axially extend the steering sleeve 7.

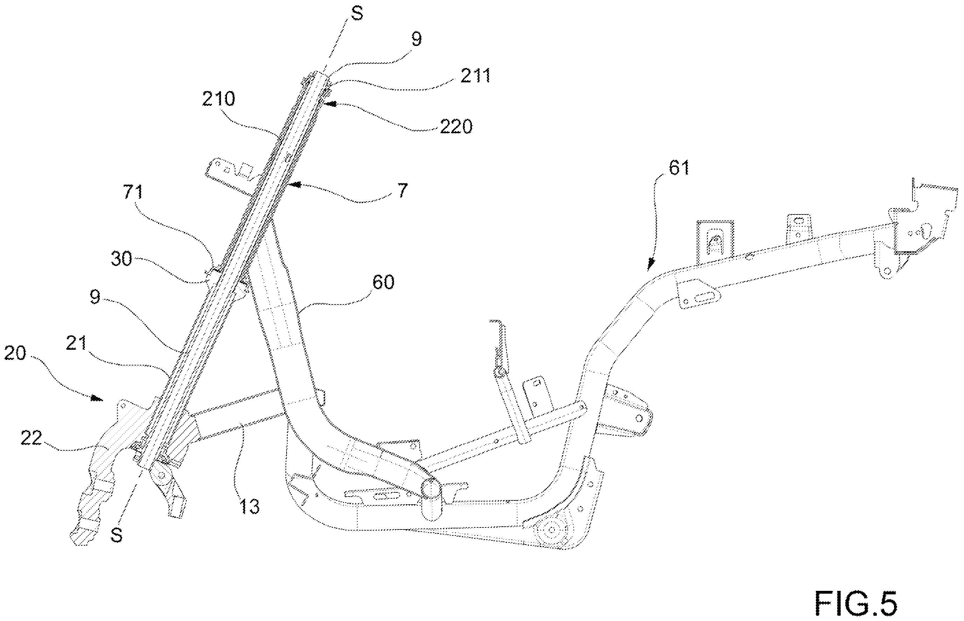

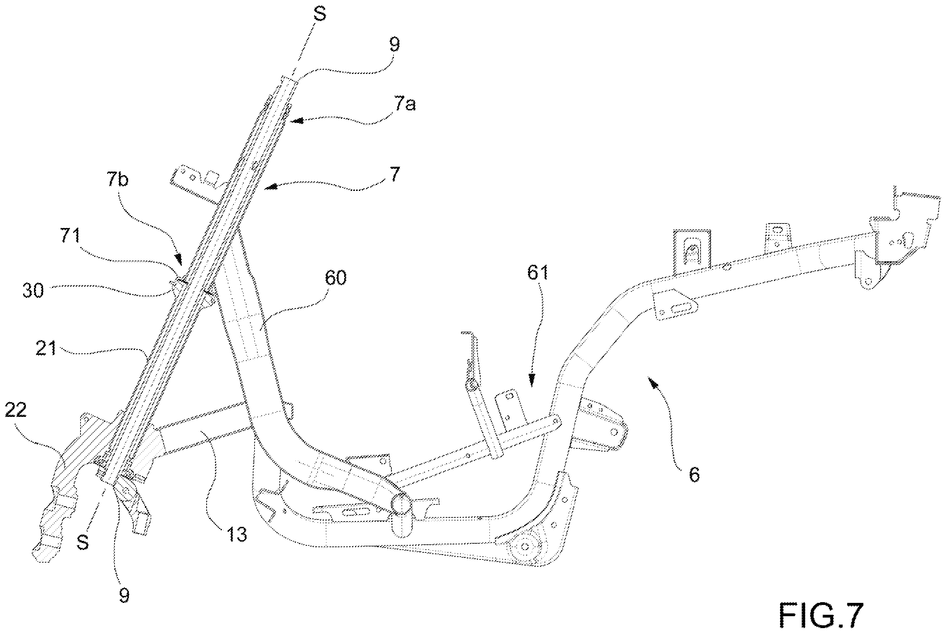

As illustrated, in particular in figures 5 and 7, the steering column 9 is arranged inside the tubular body 21.

The term "rigid connection" between the tubular body and the steering sleeve means that the tubular body has no degrees of freedom with respect to the steering sleeve and, in particular, cannot slide or rotate axially with respect to said sleeve.

The forecarriage support frame 20 further comprises a fixing structure 22 for support means of the pair of front wheels 10 ',10 ". Such fixing structure 22 is associated with the tubular body 21 at a lower end 21b thereof.

Thanks to the fact that the forecarriage support frame 20 is made as described above, that is, in extreme synthesis, as an axial extension structure of the steering sleeve rigidly connected thereto, the following technical effects are simultaneously obtained:
- stability of said structure, thanks to the rigid connection between the tubular body 21 and the steering sleeve 7; and
- ease and speed of assembly to the frame 6, since the connection to the frame 6 can be made in a single point, i.e. at the steering sleeve 7.

Furthermore, thanks to the fact that the forecarriage support frame 20 is connected to the frame 6 (via the tubular body 21) at the steering sleeve 7, i.e. at a portion of the frame 6 that is generally characterized by high construction precision, the connection of the forecarriage support frame 20 to the frame 6 can be made ensuring a constructional precision in terms of tolerance, comparable to a single-piece frame.

Preferably, the aforementioned forecarriage support frame 20 is made of metal material.

Advantageously, in order to facilitate the axial alignment of the steering sleeve 7 and the forecarriage support frame 20, at said upper end 21a the tubular body 21 is provided with axial centring means 30 with respect to the steering sleeve 7.

In particular, as illustrated in figures 5 and 7, the steering sleeve 7 is provided with a housing bell 71 for a thrust bearing at its lower end 7b. In the preferred case in which said frame 6 is also a frame utilisable to make a two-wheeled motor vehicle, said bell 71 is designed to house a thrust bearing (not illustrated) suitable to support rotationally about the steering axle S-S a support element for a front wheel, for example in the form of a support fork. Advantageously, such a support element is coaxially decouplable from the steering column.

Operatively, the aforementioned axial centring means 30 are configured to abut the housing bell 71.

In particular, as illustrated in figures 5 and 7, the aforementioned centring means 30 consist of an end bushing 30, which is fixed on the tubular body 21 and is configured to fit inside the housing bell 71 of the steering sleeve 7.

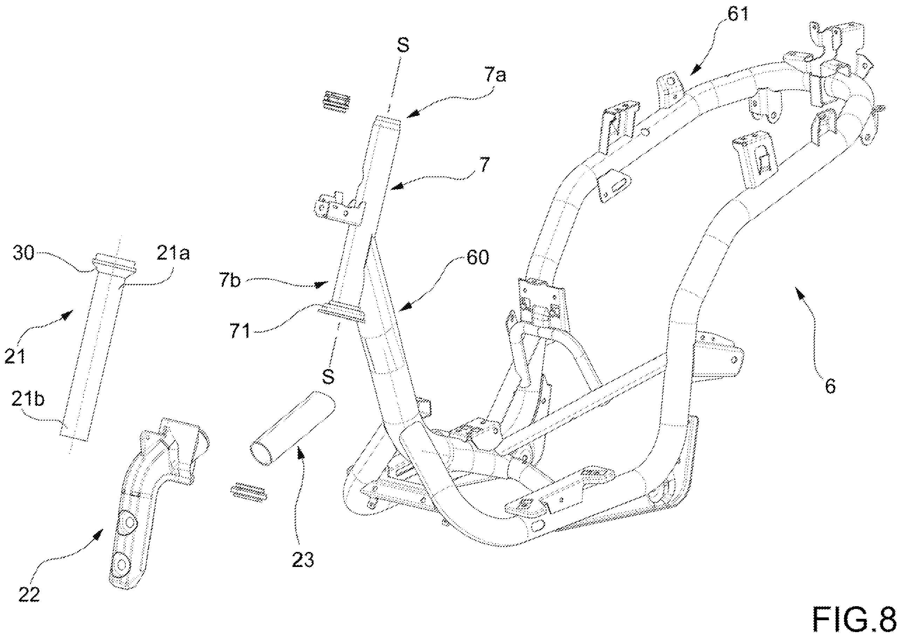

According to the embodiment illustrated in figures 7 and 8, the axial extension tubular body 21 is rigidly connected to the sleeve 7 at its upper end 21a by welding.

In particular, such welding is made between the aforesaid housing bell 71 and the end bushing 30.

In such case, preferably, the tubular body 21 may be made with the same cross-section as the steering sleeve 7. Alternatively, the tubular body 21 may also be made with a smaller cross-section than that of the steering sleeve, but in any case sufficient to allow the axial passage of the steering column and its rotation about the steering axle S-S.

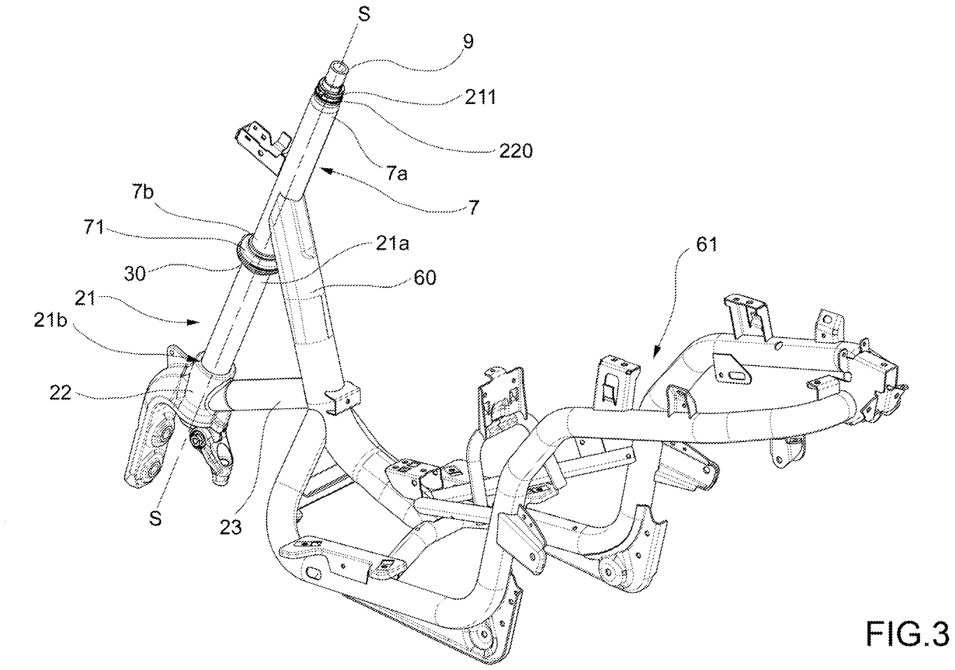

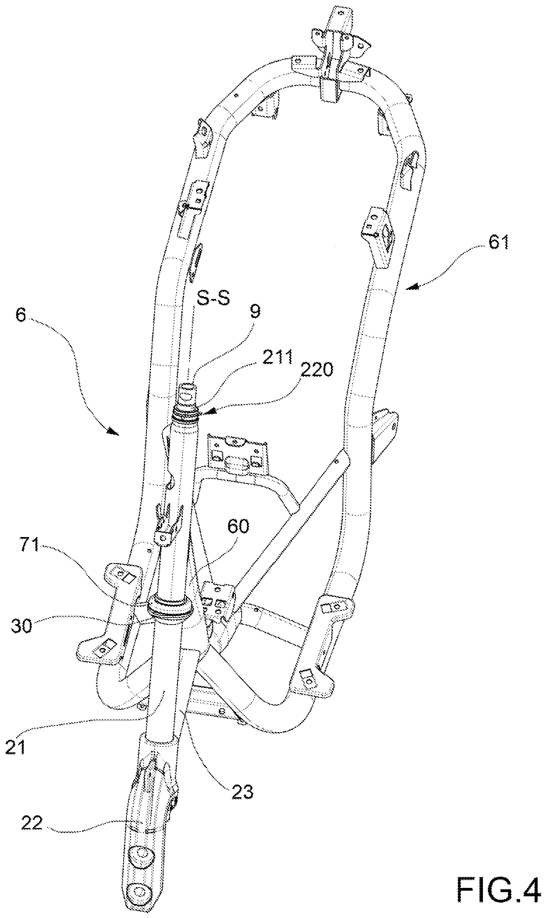

According to the embodiment illustrated in figures 1 to 6, said axial extension tubular body 21 may in turn be provided with a tubular appendix 210.

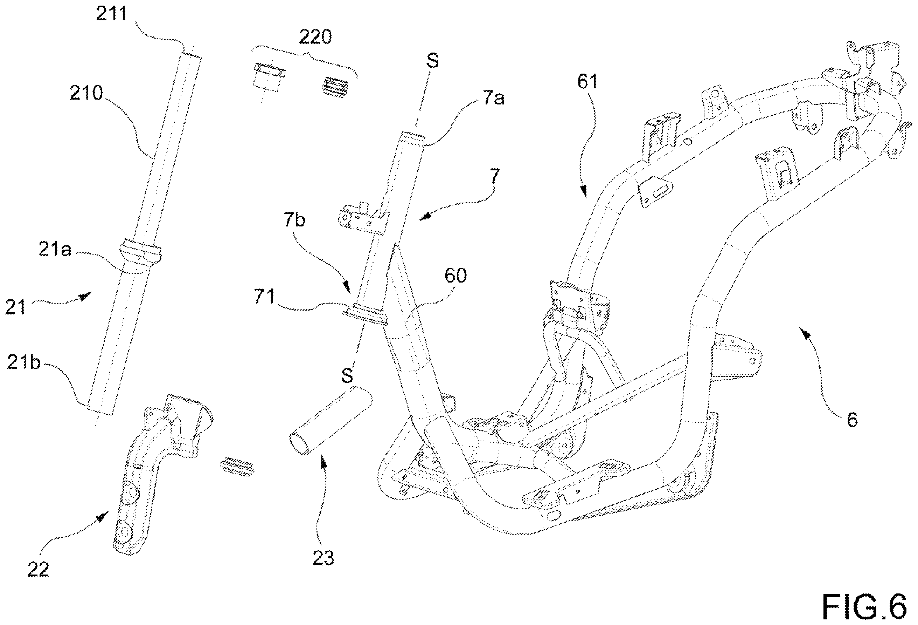

In more detail, as illustrated in particular in figures 5 and 6, said tubular appendix 210 extends axially from the upper end 21a of the tubular body 21 and is configured to coaxially engage within the steering sleeve 7 and to rotatably support the steering column 9 inside it.

In this case, the tubular body 21 may be made with the same cross-section as the steering sleeve 7, while the tubular appendix 210 must necessarily have a cross-section comprised between the inner cross-section of the steering sleeve 7 and the outer cross-section of the steering column 9.

Preferably, according to the embodiment illustrated in figures 1 to 6, said axial extension tubular body 21 is rigidly connected to the steering sleeve 7 at said tubular appendix 210.

More particularly, as illustrated in figures 5 and 6, said tubular appendix 210 projects axially with respect to the steering sleeve 7 with an end portion 211 and is constrained thereto at said end portion 211 by coaxial screwing means 220.

Advantageously, the centring of the tubular body 21 and the tubular appendix 210 on the steering sleeve 7 can be accomplished by the aforementioned axial centring means 30, configured to abut with the housing bell 71. In particular, as illustrated in figure 5, the aforementioned centring means 30 consist of an end bushing 30, which is fixed on the tubular body 21 and is configured to fit inside the housing bell 71 of the steering sleeve 7.

Operatively, the embodiment illustrated in figures 1 to 6 is more advantageous since it is characterized by a reversibility in the connection between the forecarriage support frame 20 and the frame 6. Connecting the tubular body 21 to the steering sleeve 7 by coaxial screwing means 210 and not by welding makes it easier and faster to mount and disassemble the forecarriage support frame 20 from the frame 6.

Preferably, the frame 6 comprises a central portion 60 for connection between the steering sleeve 7 and a rear portion 61. In particular, as illustrated in the accompanying figures, said central portion 60 may consist of a single tubular element that forms the main structure of the frame 6 and that extends symmetrically with respect to a centreline plane M-M of the motor vehicle 1. Other portions of the frame defining the bottom of the motor vehicle 1 may extend from said central portion 60. According to alternative embodiments (not illustrated in the attached figures), said central portion 60 may be defined by two tubular elements that are connected to each other and that extend symmetrically with respect to said centreline plane M-M of the motor vehicle 1.

According to the preferred embodiments illustrated in the accompanying figures, said forecarriage support frame 20 comprises a strut 23 extending from the tubular body 21 or from the aforesaid fixing structure 22, associated with the tubular body 21, to engage the frame 6 at said central portion 60. Advantageously, said strut 23 can be connected to said central portion 60 of the frame 6:
- by welding;
- by structural glues; or.
- by reversible fastening means, preferably a clamp.

Advantageously, by means of such strut 23 the forecarriage support frame 20 forms a closed structure with the frame 6 near the forecarriage 8. In this way, thanks to the forecarriage support frame 20, the rigidity of said frame 6 is increased. In the preferred case wherein the frame 6 can be used to make a two-wheeled motor vehicle, or even a frame specifically configured to make a two-wheeled motor vehicle, the increased rigidity given by the forecarriage support frame 20 makes the frame 6 better able to withstand the stresses of a tilting motor vehicle with two front wheels.

Preferably, the aforementioned strut 23 extends in a mainly longitudinal direction, generally understood as the front-rear direction of extension of the motor vehicle 1. In particular, the strut 23 extends in a tilted direction starting from the tubular body 21 to connect to the central portion 60.

Functionally, the aforementioned strut 23 defines an additional constraint for the forecarriage support frame 20 and mainly bears the loads along the front-rear direction of extension of the motor vehicle 1 due to braking and yawing for asymmetrical loads entering from the front wheels 10' and 10 ". For this reason, as illustrated in the accompanying figures, it is preferable for the strut 23 to extend from the aforementioned fixing structure 22, rather than from the tubular body 21. In this way, such stresses generated in the front wheels 10', 10" can be discharged directly onto the frame 6 without the interposition of the tubular body 21.

Functionally, in such a configuration, thanks to the presence of the aforementioned strut 23, the tubular body 21, extending parallel to the steering axle S-S of the motor vehicle 1, may limit itself to withstanding mainly symmetrical vertical loads.

Preferably, as already pointed out, the aforementioned central portion 60 extends symmetrically with respect to the centreline plane M-M of the motor vehicle, this meaning that the central portion 60 has its own plane of symmetry which is coplanar to the centreline plane M-M of the motor vehicle 1.

Advantageously,the aforesaid closed structure made by means of the strut 23 which engages the central portion 60 of the frame 6, extends symmetrically with respect to the aforesaid centreline plane M-M of the motor vehicle. In this way, the aforementioned closed structure is able to absorb and distribute stresses in a more balanced manner.

However, alternative embodiments may be provided (not illustrated in the attached figures) in which the aforementioned closed structure does not extend symmetrically with respect to the centreline plane M-M of the motor vehicle 1.

The object of the present invention is also a kit for converting a two-wheeled motor vehicle into a three-wheeled motor vehicle, of which two are front wheels.

In general, such a two-wheeled motor vehicle (not shown in its entirety in the appended drawings) comprises a frame extending from a forecarriage to a rear.

The aforementioned frame defines a steering sleeve, which is intended to support a steering column along the steering axle of the vehicle. The two-wheeled motor vehicle further comprises a steering column inserted into the steering sleeve. Preferably, a support element for a front wheel is connected to the steering column, for example in the form of a support fork. Advantageously, such a support element is coaxially decouplable from the steering column.

The conversion kit comprises a forecarriage support frame 20 for a two-wheeled forecarriage, mountable on the frame of the two-wheeled motor vehicle, after disassembly of the forecarriage specific to that two-wheeled motor vehicle.

In particular, the aforementioned forecarriage support frame corresponds to the forecarriage support frame 20 already described in relation to the three- or four-wheeled tilting motor vehicle 1 according to the present invention.

For the description of the conversion kit, the same numerical references already used to describe the three-wheeled tilting motor vehicle 1 will therefore be used and reference will also be made to the same figures, which, according to a preferred form of application of the invention, represent a three-wheeled motor vehicle 1 obtained by conversion of a two-wheeled motor vehicle using the conversion kit according to the invention. In the rest of the description, the frame of the two-wheeled motor vehicle will correspond to the frame 6 of the three-wheeled tilting motor vehicle 1 described above.

More specifically, the aforesaid forecarriage support frame 20 in turn comprises a tubular body 21 , which is designed to be rigidly connected to the aforesaid steering sleeve 7 at an upper end 21a of the tubular body 21, to axially extend the steering sleeve 7. The tubular body 21 is configured to receive the steering column 9 inside it.

The aforementioned forecarriage support frame 20 further comprises a fixing structure 22 for support means of the pair of front wheels 10 ',10 ". Such fixing structure 22 is configured to be associated with the tubular body 21 at a lower end thereof 21b.

Advantageously, in order to facilitate the axial alignment of the steering sleeve 7 and the forecarriage support frame 20, at said upper end 21a the tubular body 21 is provided with axial centring means 30 with respect to the steering sleeve 7.

In particular, as illustrated in figures 5 and 7, the steering sleeve 7 is provided with a housing bell 71 for a thrust bearing at its lower end 7b. Operatively, in the two-wheeled motor vehicle, such bell 71 is designed to house a thrust bearing (not shown) suitable to support rotationally around the steering axle S-S a support element for a front wheel, for example in the form of a support fork. Advantageously, such a support element is coaxially decouplable from the steering column. The assembly of the forecarriage support frame 20 on the frame 6 requires that the support element of the single front wheel be previously disassembled.

Operatively, the aforementioned axial centring means 30 are configured to abut the housing bell 71.

In particular, as illustrated in figures 5 and 7, the aforementioned centring means 30 consist of an end bushing 30, which is fixed on the tubular body 21 and is configured to engage in the housing bell 71 of the steering sleeve 7.

According to the embodiment illustrated in figures 7 and 8, the axial extension tubular body 21 is configured to be rigidly connected to the sleeve 7 at its upper end 21a by welding. In particular, such welding is carried out between the aforesaid housing bell 71 and the end bushing 30. In such case, preferably, the tubular body 21 may be made with the same cross-section as the steering sleeve 7. Alternatively, the tubular body 21 may also be made with a smaller cross-section than that of the steering sleeve, but in any case sufficient to allow the axial passage of the steering column and its rotation about the steering axle S-S.

According to the embodiment illustrated in figures 1 to 6, said axial extension tubular body 21 may in turn be provided with a tubular appendix 210.

In more detail, as illustrated in particular in figures 5 and 6, said tubular appendix 210 extends axially from the upper end 21a of the tubular body 21 and is configured to coaxially engage within the steering sleeve 7 and to rotatably support the steering column 9 inside it.

Preferably, according to the embodiment illustrated in figures 1 to 6, said axial extension tubular body 21 is configured to be rigidly connected to the steering sleeve 7 at said tubular appendix 210.

More particularly, as illustrated in figures 5 and 6, said tubular appendix 210 is sized to protrude axially with respect to the steering sleeve 7 with an end portion 211 and is configured to be constrained thereto at such end portion 211 by coaxial screwing means 220.

Advantageously, the centring of the tubular body 21 and the tubular appendix 210 on the steering sleeve 7 can be accomplished by the aforementioned axial centring means 30, configured to abut with the housing bell 71. In particular, as illustrated in figure 5, the aforementioned centring means 30 consist of an end bushing 30, which is fixed on the tubular body 21 and is configured to fit inside the housing bell 71 of the steering sleeve 7.

Operatively, the embodiment illustrated in figures 1 to 6 is more advantageous since it is characterized by a reversibility in the connection between the forecarriage support frame 20 and the frame 6. The connection of the tubular body 21 to the steering sleeve 7 by coaxial screwing means 210 and not by welding makes it possible both to mount and disassemble the forecarriage support frame 20 from the frame 6 more immediately and easily.

Preferably, the frame 6 of the two-wheeled motor vehicle 1 comprises a central portion 60 for connection between the steering sleeve 7 and a rear portion 61. In particular, as illustrated in the accompanying figures, said central portion 60 may consist of a single tubular element that forms the main structure of the frame 6 and that extends symmetrically with respect to a centreline plane M-M of the motor vehicle 1. Other portions of the frame defining the bottom of the motor vehicle 1 may extend from said central portion 60. According to alternative embodiments (not illustrated in the attached figures), said central portion 60 may be defined by two tubular elements that are connected to each other and that extend symmetrically with respect to said centreline plane M-M of the motor vehicle 1.

According to the preferred embodiments illustrated in the accompanying figures, the aforesaid forecarriage support frame 20 comprises a strut 23 extending from the tubular body 21 or said fixing structure 22, associated with the tubular body 21, and is configured to engage the frame 6 at said central portion 60. Advantageously, said strut 23 can be connected to said central portion 60 of the frame 6:
- by welding;
- by structural glues; or.
- by reversible fastening means, preferably a clamp.

Advantageously, by means of such strut 23 the forecarriage support frame 20 forms a closed structure with the frame 6 near the forecarriage 8. In this way, thanks to the forecarriage support frame 20, the rigidity of said frame 6 is increased. The increased rigidity given by the forecarriage support frame 20 makes the frame 6 of the two-wheeled motor vehicle better able to withstand the stresses of a tilting motor vehicle with two front wheels.

Preferably, the aforementioned strut 23 is configured so that, once the forecarriage support frame 20 has been mounted, it extends in a longitudinal direction, generally understood as the front-rear direction of extension of the motor vehicle 1.

Functionally, in the assembled condition, the aforementioned strut 23 goes to define an additional constraint for the forecarriage support frame 20 and mainly bears the loads along the front-rear direction of extension of the motor vehicle 1 due to braking and yawing for asymmetrical loads entering from the front wheels 10' and 10". For this reason, as illustrated in the accompanying figures, it is preferable for the strut 23 to extend from the aforementioned fixing structure 22, rather than from the tubular body 21. In this way, such stresses generated in the front wheels 10', 10" can be discharged directly onto the frame 6 without the interposition of the tubular body 21.

Functionally, in such a configuration, thanks to the presence of the aforementioned strut 23, the tubular body 21, extending parallel to the steering axle S-S of the motor vehicle 1, may limit itself to withstanding mainly symmetrical vertical loads.

Preferably, as already pointed out, the aforementioned central portion 60 of the frame 6 extends symmetrically with respect to the centreline plane M-M of the motor vehicle, this meaning that the central portion 60 has its own plane of symmetry which is coplanar to the centreline plane M-M of the motor vehicle 1.

Advantageously,the aforesaid closed structure made by means of the strut 23 which engages the central portion 60 of the frame 6, extends symmetrically with respect to the aforesaid centreline plane M-M of the motor vehicle. In this way, the aforementioned closed structure is able to absorb and distribute stresses in a more balanced manner.

However, alternative embodiments may be provided (not illustrated in the attached figures) in which the aforementioned closed structure does not extend symmetrically with respect to the centreline plane M-M of the motor vehicle 1.

Regarding the technical effects obtainable from the aforementioned conversion kit, the same considerations apply already made in relation to the three-wheeled tilting vehicle 1 and which, for brevity of exposure, will not be repeated here.

As may be appreciated from the description, the present invention makes it possible to overcome the drawbacks mentioned of the prior art.

A person skilled in the art may make numerous modifications and variations to the tilting motor vehicle with three or four wheels and to the method for blocking the tilting movements of a tilting motor vehicle with three or four wheels described above so as to satisfy contingent and specific requirements as defined by the following claims.

## Claims

1. Tilting motor vehicle with three or four-wheels, of which at least two front wheels (10 ', 10 "), comprising:
- a frame (6) extending from a forecarriage (8), which supports a pair of front wheels (10', 10 "), to a rear (12), which supports one or more rear wheels (14), said frame (6) defining a steering sleeve (7); and
- a steering column (9) coaxially supported by said steering sleeve (7) along a steering axis (S-S);
said forecarriage (8) in turn comprising a forecarriage support frame (20),
wherein said forecarriage support frame (20) comprises:
- a tubular body (21) rigidly connected to said sleeve (7) at an upper end (21a) of said tubular body (21) to axially extend said steering sleeve (7), said steering column (9) being arranged inside said tubular body (21); and
- a fixing structure (22) for support means of said pair of front wheels (10 ', 10 "), which fixing structure (22) is associated with said tubular body (21) at a lower end (21b) thereof **characterized in that** said axial extension tubular body (21) is provided with a tubular appendix (210), which extends axially starting from the upper end (21a) of said tubular body (21), said tubular appendix (210) being configured to fit coaxially inside said steering sleeve (7) and to rotary support said steering column (9).

2. Motor vehicle according to claim 1, wherein said frame (6) is a frame that can also be used for realizing a two-wheeled motor vehicle.

3. Motor vehicle according to claim 1 or 2, wherein at said upper end (21a) said tubular body (21) is provided with axial centring means (30) with respect to said steering sleeve (7), wherein in particular said steering sleeve (7) is provided at its lower end (7b) with a housing bell (71) for a thrust bearing, against which bell (71) said axial centring means (30) abuts.

4. Motor vehicle according to claim 3, wherein said centring means (30) are constituted by an end bush (30), which is fixed on said tubular body (21) and is configured to fit with said housing bell (71) of said steering sleeve (7).

5. Motor vehicle according to one or more of claim 1 to 4, wherein said axial extension tubular body (21) is rigidly connected to said sleeve (7) in correspondence with said tubular appendix (210), wherein in particular said tubular appendix (210) protrudes axially with respect to said steering sleeve (7) with an end portion (211) and is constrained thereto at said end portion (211) by means of coaxial screwing means (220).

6. Motor vehicle according to one or more of the preceding claims, wherein said frame (6) comprises a central portion (60) for connection between said steering sleeve (7) and a rear portion (61) and wherein said forecarriage support frame (20) comprises a strut (23) extending from said tubular body (21) or from said fixing structure (22) to engage said frame (6) in correspondence with said central portion (60).

7. Motor vehicle according to claim 6, wherein through said strut (23) said forecarriage support frame (20) forms a closed structure with said frame (6) near the forecarriage (8) for increasing the rigidity of the frame (6) itself, wherein in particular said central portion (60) develops symmetrically with respect to a centre plane (M-M) of said motor vehicle (1) and wherein said closed structure develops symmetrically with respect to said centre plane (M-M) of said motor vehicle (1).

8. Motor vehicle according to claim 6 or 7, wherein said strut (23) is connected to said central portion (60) of said frame (6):
- by welding;
- by structural glues; or.
- by reversible fastening means, preferably a clamp.

9. Motor vehicle according to one or more of the previous claims, wherein said two front wheels (10', 10") are kinematically connected to each other and to the forecarriage support frame (20) by means of a tilting kinematic mechanism (40) which guarantees them to tilt and / or steer.

10. Kit for converting a two-wheeled motor vehicle into a three-wheeled motor vehicle, including two front wheels, wherein said two-wheeled motor vehicle comprises:
- a frame (6) extending from a forecarriage (8) to a rear (12), said frame (6) defining a steering sleeve (7); and
- a steering column (9) coaxially supported by said steering sleeve (7) along a steering axis (S-S);
said conversion kit comprising a forecarriage support frame (20) which in turn comprises:
- a tubular body (21) which is destined to be rigidly connected to said sleeve (7) at an upper end (21a) of said tubular body (21) to axially extend said steering sleeve (7), said tubular body (21) being configured to receive inside said steering column (9); and
- a fixing structure (22) for support means of a pair of front wheels (10 ', 10 "), which fixing structure (22) is configured to be associated with said tubular body (21) at a lower end (21b) thereof
**characterized in that** said axial extension tubular body (21) is provided with a tubular appendix (210), which extends axially starting from the upper end (21a) of said tubular body (21), said tubular appendix (210) being configured to fit coaxially in said steering sleeve (7) and to rotary support said steering column (9).

11. Kit according to claim 10, wherein at said upper end (21a) said tubular body (21) is provided with axial centring means (30) with respect to said steering sleeve (7), wherein in particular said steering sleeve (7) is provided at its lower end (7b) with a housing bell (71) for a thrust bearing, said axial centring means (30) being configured to abut against said bell (71).

12. Kit according to claim 11, wherein said centring means (30) are constituted by an end bush (30), which is fixed on said tubular body (21) and is configured to fit with the housing bell (71) of said steering sleeve (7).

13. Kit according to one or more of claims 10 to 12, wherein said axial extension tubular body (21) is configured to be rigidly connected to said sleeve (7) in correspondence with said tubular appendix (210), wherein in particular said tubular appendix (210) is sized to protrude axially with respect to said steering sleeve (7) with an end portion (211) and is configured to be constrained thereto at said end portion (211) by means of coaxial screwing means (220).

14. Kit according to one or more of the claims 10 to 13, wherein said frame (6) comprises a central portion (60) for connection between said steering sleeve (7) and a rear portion (61) and wherein said forecarriage support frame (20) comprises a strut (23) extending from said tubular body (21) or from said fixing structure (22) and is configured to engage said frame (6) in correspondence with said central portion (60), wherein in particular through said strut (23) said forecarriage support frame (20) forms a closed structure with said frame (6) near the forecarriage (8), once mounted, for increasing the rigidity of the frame (6), and more in particular wherein said central portion (60) develops symmetrically with respect to a centre plane (M-M) of said motor vehicle (1) and wherein said closed structure develops symmetrically with respect to said centre plane (M-M).

15. Kit according to claim 14, wherein said strut (23) is configured to be connected to said central portion (60) of said frame (6):
- by welding;
- by structural glues; or
- by reversible fastening means, preferably a clamp.

## Patentansprüche

1. Neigekraftfahrzeug mit drei oder vier Rädern, von denen mindestens zwei Vorderräder (10', 10") sind, umfassend:
- einen Rahmen (6), der sich von einem Vordergestell (8), das ein Paar Vorderräder (10', 10") stützt bzw. trägt, zu einem Heck (12) erstreckt, das ein oder mehrere Hinterräder (14) trägt, wobei der Rahmen (6) eine Lenkhülse (7) definiert; und
- eine Lenksäule (9), die durch die Lenkhülse (7) entlang einer Lenkachse (S-S) koaxial gestützt bzw. getragen ist;
wobei das Vordergestell (8) wiederum einen Vordergestellstütz- bzw.
- trägerrahmen (20) umfasst,
wobei der Vordergestellstütz- bzw. -trägerrahmen (20) umfasst:
- einen rohrförmigen Körper (21), der an einem oberen Ende (21a) des rohrförmigen Körpers (21) starr mit der Hülse (7) verbunden ist, um die Lenkhülse (7) axial zu verlängern, wobei die Lenksäule (9) innerhalb des rohrförmigen Körpers (21) angeordnet ist; und
- eine Befestigungsstruktur (22) für Stütz- bzw. Trägermittel des Paars Vorderräder (10', 10"), wobei die Befestigungsstruktur (22) mit dem rohrförmigen Körper (21) an einem unteren Ende (21b) davon verbunden ist, **dadurch gekennzeichnet, dass** der Axiale-Verlängerung-Rohrförmige-Körper (21) mit einem rohrförmigen Fortsatz (210) versehen ist, der sich ausgehend von dem oberen Ende (21a) des rohrförmigen Körpers (21) axial erstreckt, wobei der rohrförmige Fortsatz (210) konfiguriert ist, koaxial in die Lenkhülse (7) zu passen und die Lenksäule (9) drehbar zu stützen bzw. zu tragen.

2. Kraftfahrzeug nach Anspruch 1, wobei der Rahmen (6) ein Rahmen ist, der auch zur Realisierung eines zweirädrigen Kraftfahrzeugs verwendet werden kann.

3. Kraftfahrzeug nach Anspruch 1 oder 2, wobei der rohrförmige Körper (21) an dem oberen Ende (21a) mit axialen Zentriermitteln (30) in Bezug auf die Lenkhülse (7) versehen ist, wobei insbesondere die Lenkhülse (7) an ihrem unteren Ende (7b) mit einer Gehäuseglocke (71) für ein Drucklager versehen ist, gegen welche Glocke (71) die axialen Zentriermittel (30) anliegen.

4. Kraftfahrzeug nach Anspruch 3, wobei die Zentriermittel (30) aus einer Endbuchse (30) bestehen, die an dem rohrförmigen Körper (21) befestigt ist und konfiguriert ist, mit der Gehäuseglocke (71) der Lenkhülse (7) zusammenzupassen.

5. Kraftfahrzeug nach einem oder mehreren der Ansprüche 1 bis 4, wobei der Axiale-Verlängerung-Rohrförmige-Körper (21) mit der Hülse (7) in Übereinstimmung mit dem rohrförmigen Fortsatz (210) starr verbunden ist, wobei insbesondere der rohrförmige Fortsatz (210) axial in Bezug auf die Lenkhülse (7) mit einem Endabschnitt (211) vorragt und daran an dem Endabschnitt (211) mittels koaxialer Schraubmittel (220) gehalten ist.

6. Kraftfahrzeug nach einem oder mehreren der vorhergehenden Ansprüche, wobei der Rahmen (6) einen zentralen Abschnitt (60) zur Verbindung zwischen der Lenkhülse (7) und einem Heckabschnitt (61) umfasst und wobei der Vordergestellstützrahmen (20) eine Strebe (23) umfasst, die sich von dem rohrförmigen Körper (21) oder von der Befestigungsstruktur (22) erstreckt, um in den Rahmen (6) in Übereinstimmung mit dem zentralen Abschnitt (60) einzugreifen.

7. Kraftfahrzeug nach Anspruch 6, wobei der Vordergestellstützrahmen (20) durch die Strebe (23) eine geschlossene Struktur mit dem Rahmen (6) nahe dem Vordergestell (8) bildet, um die Steifigkeit des Rahmens (6) selbst zu erhöhen, wobei insbesondere der zentrale Abschnitt (60) symmetrisch in Bezug auf eine Mittelebene (M-M) des Kraftfahrzeugs (1) verläuft und wobei die geschlossene Struktur symmetrisch in Bezug auf die Mittelebene (M-M) des Kraftfahrzeugs (1) verläuft.

8. Kraftfahrzeug nach Anspruch 6 oder 7, wobei die Strebe (23) mit dem zentralen Abschnitt (60) des Rahmens (6) verbunden ist:
- durch Schweißen;
- durch Strukturkleber; oder
- durch reversible Befestigungsmittel, vorzugsweise eine Klemme.

9. Kraftfahrzeug nach einem oder mehreren der vorhergehenden Ansprüche, wobei die beiden Vorderräder (10', 10") miteinander und mit dem Vordergestellstützrahmen (20) mittels einer Neigekinematik (40) kinematisch verbunden sind, welche ihnen ein Neigen und/oder Lenken garantiert.

10. Kit bzw. Bausatz zum Umbauen eines zweirädrigen Kraftfahrzeugs in ein dreirädriges Kraftfahrzeug, das zwei Vorderräder enthält, wobei das zweirädrige Kraftfahrzeug umfasst:
- einen Rahmen (6), der sich von einem Vordergestell (8) zu einem Heck (12) erstreckt, wobei der Rahmen (6) eine Lenkhülse (7) definiert; und
- eine Lenksäule (9), die durch die Lenkhülse (7) entlang einer Lenkachse (S-S) koaxial gestützt bzw. getragen ist;
wobei das Umbaukit bzw. der Umbausatz einen Vordergestellstütz- bzw.
- trägerrahmen (20) umfasst, der wiederum umfasst:
- einen rohrförmigen Körper (21), der dazu bestimmt ist, an einem oberen Ende (21a) des rohrförmigen Körpers (21) starr mit der Hülse (7) verbunden zu werden, um die Lenkhülse (7) axial zu verlängern, wobei der rohrförmige Körper (21) konfiguriert ist, die Lenksäule (9) im Inneren aufzunehmen; und
- eine Befestigungsstruktur (22) für Stütz- bzw. Trägermittel eines Paars Vorderräder (10', 10"), wobei die Befestigungsstruktur (22) konfiguriert ist, mit dem rohrförmigen Körper (21) an einem unteren Ende (21b) davon verbunden zu werden,
**dadurch gekennzeichnet, dass** der Axiale-Verlängerung-Rohrförmige-Körper (21) mit einem rohrförmigen Fortsatz (210) versehen ist, der sich ausgehend von dem oberen Ende (21a) des rohrförmigen Körpers (21) axial erstreckt, wobei der rohrförmige Fortsatz (210) konfiguriert ist, koaxial in die Lenkhülse (7) zu passen und die Lenksäule (9) drehbar zu stützen bzw. zu tragen.

11. Kit nach Anspruch 10, wobei der rohrförmige Körper (21) an dem oberen Ende (21a) mit axialen Zentriermitteln (30) in Bezug auf die Lenkhülse (7) versehen ist, wobei insbesondere die Lenkhülse (7) an ihrem unteren Ende (7b) mit einer Gehäuseglocke (71) für ein Drucklager versehen ist, wobei die axialen Zentriermittel (30) konfiguriert sind, gegen die Glocke (71) anzuliegen.

12. Kit nach Anspruch 11, wobei die Zentriermittel (30) aus einer Endbuchse (30) bestehen, die an dem rohrförmigen Körper (21) befestigt ist und konfiguriert ist, mit der Gehäuseglocke (71) der Lenkhülse (7) zusammenzupassen.

13. Kit nach einem oder mehreren der Ansprüche 10 bis 12, wobei der Axiale-Verlängerung-Rohrförmige-Körper (21) mit der Hülse (7) in Übereinstimmung mit dem rohrförmigen Fortsatz (210) starr verbunden ist, wobei insbesondere der rohrförmige Fortsatz (210) so bemessen ist, dass er axial in Bezug auf die Lenkhülse (7) mit einem Endabschnitt (211) vorragt, und konfiguriert ist, daran an dem Endabschnitt (211) mittels koaxialer Schraubmittel (220) gehalten zu sein.

14. Kit nach einem oder mehreren der Ansprüche 10 bis 13, wobei der Rahmen (6) einen zentralen Abschnitt (60) zur Verbindung zwischen der Lenkhülse (7) und einem Heckabschnitt (61) umfasst und wobei der Vordergestellstützrahmen (20) eine Strebe (23) umfasst, die sich von dem rohrförmigen Körper (21) oder von der Befestigungsstruktur (22) erstreckt, um in den Rahmen (6) in Übereinstimmung mit dem zentralen Abschnitt (60) einzugreifen, wobei der Vordergestellstützrahmen (20) insbesondere durch die Strebe (23) eine geschlossene Struktur mit dem Rahmen (6) nahe dem Vordergestell (8) bildet, sobald er montiert ist, um die Steifigkeit des Rahmens (6) zu erhöhen, und insbesondere wobei der zentrale Abschnitt (60) symmetrisch in Bezug auf eine Mittelebene (M-M) des Kraftfahrzeugs (1) verläuft und wobei die geschlossene Struktur symmetrisch in Bezug auf die Mittelebene (M-M) des Kraftfahrzeugs (1) verläuft.

15. Kit nach Anspruch 14, wobei die Strebe (23) konfiguriert ist, mit dem zentralen Abschnitt (60) des Rahmens (6) verbunden zu werden:
- durch Schweißen;
- durch Strukturkleber; oder
- durch reversible Befestigungsmittel, vorzugsweise eine Klemme.

## Revendications

1. Véhicule automobile basculant avec trois ou quatre roues, parmi lesquelles au moins deux roues avant (10', 10"), comprenant :
- un châssis (6) s'étendant depuis un avant-train (8), qui supporte une paire de roues avant (10', 10"), jusqu'à un arrière (12), qui supporte une ou plusieurs roues arrière (14), ledit châssis (6) définissant un manchon de direction (7) ; et
- une colonne de direction (9) supportée coaxialement par ledit manchon de direction (7) le long d'un axe de direction (S-S) ;
ledit avant-train (8) comprenant à son tour un châssis de support d'avant-train (20),
ledit châssis de support d'avant-train (20) comprenant :
- un corps tubulaire (21) relié rigidement audit manchon (7) à une extrémité supérieure (21a) dudit corps tubulaire (21) pour étendre axialement ledit manchon de direction (7), ladite colonne de direction (9) étant agencée à l'intérieur dudit corps tubulaire (21) ; et
- une structure de fixation (22) pour des moyens de support de ladite paire de roues avant (10', 10"), ladite structure de fixation (22) étant associée audit corps tubulaire (21) à une extrémité inférieure (21b) de celle-ci,
**caractérisé en ce que** ledit corps tubulaire d'extension axiale (21) est pourvu d'un appendice tubulaire (210) qui s'étend axialement depuis l'extrémité supérieure (21a) dudit corps tubulaire (21), ledit appendice tubulaire (210) étant configuré pour s'ajuster coaxialement à l'intérieur dudit manchon de direction (7) et pour supporter en rotation ladite colonne de direction (9).

2. Véhicule automobile selon la revendication 1, ledit châssis (6) étant un châssis qui peut également être utilisé pour réaliser un véhicule automobile à deux roues.

3. Véhicule automobile selon la revendication 1 ou 2, à ladite extrémité supérieure (21a), ledit corps tubulaire (21) étant pourvu de moyens de centrage axial (30) par rapport audit manchon de direction (7), en particulier ledit manchon de direction (7) étant pourvu, à son extrémité inférieure (7b), d'une cloche de logement (71) pour un palier de butée, lesdits moyens de centrage axial (30) venant en butée contre ladite cloche (71).

4. Véhicule automobile selon la revendication 3, lesdits moyens de centrage (30) étant constitués d'une bague d'extrémité (30), qui est fixée sur ledit corps tubulaire (21) et est configurée pour s'ajuster avec ladite cloche de logement (71) dudit manchon de direction (7).

5. Véhicule automobile selon une ou plusieurs des revendications 1 à 4, ledit corps tubulaire d'extension axiale (21) étant relié rigidement audit manchon (7) en alignement avec ledit appendice tubulaire (210), en particulier, ledit appendice tubulaire (210) faisant saillie axialement par rapport audit manchon de direction (7) avec une portion d'extrémité (211) et étant fixé à celui-ci à ladite portion d'extrémité (211) par des moyens de vissage coaxiaux (220).

6. Véhicule automobile selon une ou plusieurs des revendications précédentes, ledit châssis (6) comprenant une portion centrale (60) pour une liaison entre ledit manchon de direction (7) et une portion arrière (61) et ledit châssis de support d'avant-train (20) comprenant une entretoise (23) s'étendant depuis ledit corps tubulaire (21) ou depuis ladite structure de fixation (22) pour se mettre en prise avec ledit châssis (6) en alignement avec ladite portion centrale (60).

7. Véhicule automobile selon la revendication 6, ledit châssis de support d'avant-train (20) formant, à travers ladite entretoise (23), une structure fermée avec ledit châssis (6) près de l'avant-train (8) pour accroître la rigidité du châssis (6) proprement dit, en particulier, ladite portion centrale (60) se développant symétriquement par rapport à un plan central (M-M) dudit véhicule automobile (1) et ladite structure fermée se développant symétriquement par rapport audit plan central (M-M) dudit véhicule automobile (1).

8. Véhicule automobile selon la revendication 6 ou 7, ladite entretoise (23) étant attachée à ladite portion centrale (60) dudit châssis (6) :
- par soudage ;
- par des colles structurelles ; ou
- par des moyens de serrage réversible, de préférence un collier de serrage.

9. Véhicule automobile selon une ou plusieurs des revendications précédentes, lesdites deux roues avant (10', 10") étant reliées cinématiquement l'une à l'autre et au châssis de support d'avant-train (20) par un mécanisme cinématique basculant (40) qui garantit leur inclinaison et/ou leur orientation.

10. Kit de conversion d'un véhicule automobile à deux roues en un véhicule automobile à trois roues, incluant deux roues avant, ledit véhicule automobile à deux roues comprenant :
- un châssis (6) s'étendant depuis un avant-train (8) jusqu'à un arrière (12), ledit châssis (6) définissant un manchon de direction (7) ; et
- une colonne de direction (9) supportée coaxialement par ledit manchon de direction (7) le long d'un axe de direction (S-S) ;
ledit kit de conversion comprenant un châssis de support d'avant-train (20) qui comprend à son tour :
- un corps tubulaire (21) qui est destiné à être relié rigidement audit manchon (7) à une extrémité supérieure (21a) dudit corps tubulaire (21) pour étendre axialement ledit manchon de direction (7), ledit corps tubulaire (21) étant configuré pour recevoir ladite colonne de direction (9) à l'intérieur de celui-ci ; et
- une structure de fixation (22) pour des moyens de support d'une paire de roues avant (10', 10"), ladite structure de fixation (22) étant configurée pour être associée audit corps tubulaire (21) à une extrémité inférieure (21b) de celle-ci,
**caractérisé en ce que** ledit corps tubulaire d'extension axiale (21) est pourvu d'un appendice tubulaire (210) qui s'étend axialement depuis l'extrémité supérieure (21a) dudit corps tubulaire (21), ledit appendice tubulaire (210) étant configuré pour s'ajuster coaxialement à l'intérieur dudit manchon de direction (7) et pour supporter en rotation ladite colonne de direction (9).

11. Kit selon la revendication 10, ledit corps tubulaire (21) étant pourvu, à ladite extrémité supérieure (21a), de moyens de centrage axiaux (30) par rapport audit manchon de direction (7), en particulier, ledit manchon de direction (7) étant pourvu, à son extrémité inférieure (7b), d'une cloche de logement (71) pour un palier de butée, lesdits moyens de centrage axiaux (30) étant configurés pour venir en butée contre ladite cloche (71).

12. Kit selon la revendication 11, lesdits moyens de centrage (30) étant constitués d'une bague d'extrémité (30), qui est fixée sur ledit corps tubulaire (21) et est configurée pour s'ajuster avec ladite cloche de logement (71) dudit manchon de direction (7).

13. Kit selon une ou plusieurs des revendications 10 à 12, ledit corps tubulaire d'extension axiale (21) étant configuré pour être relié rigidement audit manchon (7) en alignement avec ledit appendice tubulaire (210), en particulier, ledit appendice tubulaire (210) étant dimensionné pour faire saillie axialement par rapport audit manchon de direction (7) avec une portion d'extrémité (211) et étant configuré pour être fixé à celui-ci à ladite portion d'extrémité (211) par des moyens de vissage coaxiaux (220).

14. Kit selon une ou plusieurs des revendications 10 à 13, dans ledit châssis (6) comprenant une portion centrale (60) pour une liaison entre ledit manchon de direction (7) et une portion arrière (61) et ledit châssis de support d'avant-train (20) comprenant une entretoise (23) s'étendant depuis ledit corps tubulaire (21) ou depuis ladite structure de fixation (22) et étant configuré pour se mettre en prise avec ledit châssis (6) en alignement avec ladite portion centrale (60), en particulier, ledit châssis de support d'avant-train (20) formant, à travers ladite entretoise (23), une structure fermée avec ledit châssis (6) près de l'avant-train (8), une fois monté, pour accroître la rigidité du châssis (6), et plus en particulier, ladite portion centrale (60) se développant symétriquement par rapport à un plan central (M-M) dudit véhicule automobile (1) et ladite structure fermée se développant symétriquement par rapport audit plan central (M-M).

15. Kit selon la revendication 14, ladite entretoise (23) étant configurée pour être attachée à ladite portion centrale (60) dudit châssis (6) :
- par soudage ;
- par des colles structurelles ; ou
- par des moyens de serrage réversible, de préférence un collier de serrage.
